# EUROPÄISCHE PATENTANMELDUNG

(11) **EP 0 781 520 A1**
(43) Veröffentlichungstag der Anmeldung: **02.07.1997**
(21) Anmeldenummer: 96119499.0
(22) Anmeldetag: 05.12.1996
(51) Int. Cl.: A47J 31/36, A47J 31/46

(54) **Brühgetränkezubereitungsmaschine**

(30) Priorität: 30.12.1995 DE 19549227
(71) Anmelder: Braun Aktiengesellschaft, Frankfurt am Main (DE)
(72) Erfinder: Klawuhn, Manfred, 60322 Frankfurt am Main (DE); Miltenberger, Christof, 61389 Oberreifenberg (DE); Müller, Roland, 63303 Dreieich (DE); Peter, Andreas, 61476 Kronberg (DE); Schäfer, Gerhard, 60437 Frankfurt am Main (DE)

(57) **Zusammenfassung**

Die Erfindung betrifft eine Brühgetränkezubereitungsmaschine mit einem Wasservorratsbehälter (1) und einer von einem Elektromotor (45) elektrisch angetriebenen Pumpe (6), die Wasser aus dem Wasservorratsbehälter (1) unter Druck setzt und einem von einer elektrischen Heizeinrichtung (14) beheizten Durchlauferhitzer (11) zuführt. In dem Durchlauferhitzer (11) wird in einem Wasserrohr (13) Wasser erhitzt und anschließend einer mit Kaffeemehl befüllbaren Druckkammer (35) einer Brüheinrichtung (34) zugeführt, aus der nach dem Extraktionsvorgang das fertige Kaffeegetränk in ein Gefäß (38, 39) abfließt. Nach der Erfindung ist im Strömungsmittelweg (9, 13, 15) zwischen dem Durchlauferhitzer (11) und der Brüheinrichtung (34) eine bei Überschreiten eines vorgegebenen Drucks öffnende Ventileinrichtung (20) ausgebildet. Hierdurch bleibt der von der Pumpe (6) geförderte und durch den Durchlauferhitzer (11) strömende Wasserstrom nahezu konstant, was eine gleichmäßige Wärmeabfuhr im Durchlauferhitzer (11) hervorruft und einen Stillstand des Elektromotors (45) vermeidet. Hierdurch wird auch die Temperaturregelung sowohl des Durchlauferhitzers (11) wie des im Durchlauferhitzer (11) erhitzten Wassers annähernd konstant gehalten.

## Beschreibung

Die Erfindung betrifft eine Brühgetränkezubereitungsmaschine nach dem Oberbegriff des Anspruchs 1.

Eine derartige Brühgetränkezubereitungsmaschine ist beispielsweise aus der EP-0 342 516 A1 bekannt. Bei dieser Brühgetränkemaschine besteht der Durchlauferhitzer aus einem Thermoblock, in dem wasserführende Kanäle ausgebildet sind, die von einer Heizeinrichtung beheizt werden. Derartige Thermoblöcke sind bezüglich ihrer Temperaturregelung verhältnismäßig träge, da es immer eine gewisse Zeit in Anspruch nimmt, bis der vorzugsweise aus Aluminium bestehende Gußblock aufgeheizt ist, bzw. nach Abgabe seiner Wärme an das Wasser sich wieder abgekühlt hat. Dies kann sich auch auf die Wassertemperatur nachteilig auswirken, da diese aufgrund der Trägheit der Temperaturregelung des Thermoblocks immer im Bereich von einigen Grad Celsius schwankt. Derartige Thermoblöcke sind auch in ihrer Herstellung aufwendig und benötigen zum Speichern von Wärme eine ziemlich große Gußmasse an gut wärmeleitfähigem Material, wie beispielsweise Aluminium.

Bei diesem Thermoblock ist neben dem Wasserkanal zusätzlich ein Dampfkanal ausgebildet, in den zum Erzeugen von Dampf, der beispielsweise zum Erhitzen von Getränken oder zum Aufschäumen von Milch dient, nur eine geringe Menge an Wasser pro Zeiteinheit eingeleitet wird. Zum Herstellen von Dampf wird also ein Ventil betätigt, das einerseits die Wasserzufuhr zu der für die Herstellung eines Espressos zuständigen Kanaleinrichtung sperrt und gleichzeitig eine gedrosselte Wasserzufuhr zu dem Dampfkanal freigibt und durch das andererseits eine zweite Heizeinrichtung zugeschaltet wird, damit die Temperatur des Thermoblocks steigt und so überhaupt Dampf in ausreichender Menge erzeugt werden kann.

Aus der DE-36 07 173 A1 ist weiterhin eine elektrische Brühgetränkezubereitungsmaschine bekannt, bei der der Durchlauferhitzer aus einem an einem Wasserrohr angelöteten Heizstab besteht. Derartige Durchlauferhitzer können praktisch nur sehr wenig Wärme speichern, da das Wasserrohr und der Heizstab verhältnismäßig dünn, also mit wenig Wärmespeichermasse ausgebildet sind. Dieser Durchlauferhitzer erzeugt heißes Wasser und fördert dieses nahezu drucklos in einen oberhalb des Durchlauferhitzers ausgebildeten Kaffeefilter. Die Förderung des heißen Wassers erfolgt dadurch, daß im Wasserrohr Dampfblasen gebildet werden, die im Steigrohr aufsteigen und so das heiße Wasser mit nach oben reißen. Dieser Durchlauferhitzer dient also neben der Aufheizung von Wasser zusätzlich noch als Heißwasserförderpumpe.

Aus der DE-41 30 447 A1 ist weiterhin eine Espressomaschine mit einem Wassererhitzer bekannt, der aus einem mit Wasser befüllbaren Behälter und einer am Boden des Behälters ausgebildeten Heizeinrichtung besteht. Zwischen der Heizeinrichtung und dem Boden des Behälters ist noch ein Dampfrohr ausgebildet, in dem Dampf erzeugt werden kann. Die Heizeinrichtung und das Dampfrohr sind übereinander angeordnet und sind gut wärmeleitend, sowohl untereinander wie mit dem Boden des Behälters verbunden. Bei diesem Wassererhitzer muß erst das ganze im Behälter befindliche Wasser erhitzt werden, was eine verhältnismäßig lange Zeit in Anspruch nimmt, bis die Espressomaschine betriebsbereit ist. Ein derartiger Wassererhitzer ist neben dem vorteilhaften Speichern von einer großen Menge an Heißwasser in seiner Herstellung nicht nur aufwendig sondern er ist auch teuer.

Das heiße Wasser wird bei dieser Espressomaschine von einer elektrisch angetriebenen Pumpe zu einer Druckkammer einer Brüheinrichtung gepumpt, wo es dann aus dem Kaffeemehl Extraktionsstoffe unter Druck herausschwemmt, die als Kaffee- oder insbesondere als Espressogetränk unter Bildung von Crema aus der Brüheinrichtung abfließen. Beim Einfließen des unter Druck stehenden Heißwassers in die Druckkammer kann es, wie bei allen Espressomaschinen, zu Verstopfungen am Sieb kommen, wenn die Austrittslöcher sehr klein sind und sich durch sehr feinkörnig gemahlenes und nunmehr angefeuchtetes Kaffeemehl zugesetzt haben. Die Folge ist, daß der Druck in der Druckkammer so lange ansteigt, bis die Leistungsgrenze des die Pumpe antreibenden Elektromotors erreicht ist und die Pumpe immer langsamer wird, bis sie letztendlich stehenbleibt. Sobald durch das durch die verstopften Sieblöcher abfließende Getränk der Druck in der Druckkammer wieder geringfügig abgebaut ist, bewegt sich der Elektromotor wieder langsam und es wird erneut etwas Wasser in die Druckkammer eingepumpt. Dieser Vorgang verläuft letztendlich so lange, bis eine ausreichend große Menge an Espressogetränk hergestellt ist und das Gerät abgeschaltet wird. Abgesehen von einem verhältnismäßig lange andauernden Brühvorgang wird hierbei die elektrische Antriebseinrichtung und somit auch die Pumpe allzu hoch belastet. Dies kann sogar soweit führen, das der Elektromotor oder die Pumpe beschädigt wird.

Um diesen hohen Belastungen der Pumpe und des Elektromotors entgegenzuwirken, ist es möglich, die Sieblöcher zu vergrößern, damit auch das feinste Kaffeemehl nicht die Sieblöcher verstopft. Dies hat aber wiederum den Nachteil, daß eine nicht ausreichend gute Crema erzeugt wird. Eine andere Möglichkeit besteht darin, in dem Drucksystem eine Ventileinrichtung (Schnüffelloch) auszubilden, die bei ansteigendem Druck in der Druckkammer und der damit eintretenden Dehnung zwischen dem Kolben und dem Gehäuse freigegeben wird, wodurch in der Druckkammer überschüssiger Druck zur Atmosphäre hin abgebaut werden kann. Eine derartige relative Verschiebung vom Kolben gegenüber der Druckkammer wird in der älteren deutschen Patentanmeldung 44 36 080.0 beschrieben und ist in der von der Anmelderin selbst vertriebenen Espressomaschine "Braun Espresso Cappuccino Pro" realisiert (vgl. Braun Programmübersicht 1995/96, Ausgabe 10/95).

Weiterhin ist eine ebenso von der Anmelderin selbst vertriebene Brühgetränkezubereitungsmaschine bekannt, die unter dem Namen "Braun Espresso Master professional", Typ E 400 T, im Handel angeboten wurde (vgl. Braun-Programmübersicht, Ausgabe Januar 1992). Bei dieser Espressomaschine ist in der Ausgangsleitung des Wasservorratsbehälters eine von einem Elektromotor elektrisch angetriebene Pumpe ausgebildet, deren Elektromotor von einem nach der Frequenz des Stromnetzes oszillierenden Schwinganker gebildet wird. An der Ausgangsleitung hinter der Pumpe ist ein strömungsgesteuertes Überdruck- bzw. Entlüftungsventil ausgebildet, das bei unzulässig hohem Überdruck (etwa 25 bar) Wasser sowie etwa im Strömungsmittelweg vorhandene Luft über eine Rücklaufleitung zum Wasservorratsbehälter hin abbaut.

Die Ausgangsleitung ist mit der Druckkammer einer mit Kaffeemehl befüllbaren Brüheinrichtung verbunden, aus der ein extrahierter Espresso abfließt. Der hier eine hohe Wärmespeicherenergie aufnehmende Thermoblock dient als Durchlauferhitzer und baut auf dem Effekt der thermischen Dämpfung durch träge (große) Aluminium- und/oder Wassermassen auf und glättet so den ungleichmäßigen Wärmebedarf während eines Pumpvorgangs, d.h., eine verhältnismäßig gleichmäßige Wassertemperatur kann nur dann erreicht werden, wenn die Wärmespeicher- und/oder Wassermasse (infolge langer Wasserwege) sowie die Heizleistung im Thermoblock groß ist. Derartige Thermoblöcke sind daher aufwendig und teuer.

Aufgabe der Erfindung ist es nunmehr, eine Brühgetränkezubereitungsmaschine zum Herstellen eines Espressos oder Cappuccinos nach dem Oberbegriff des Patentanspruchs 1 derart zu verbessern, daß der Durchlauferhitzer in seinem Aufbau äußerst einfach und kostengünstig wird.

Diese Aufgabe wird erfindungsgemäß durch die Merkmale des Patentanspruchs 1 gelöst. Hierbei wird eine Brühgetränkezubereitungsmaschine geschaffen, die neben der Herstellung eines Espressogetränks auch Dampf für einen Cappuccino erzeugen kann. Hierzu ist dann nach der Erfindung ein Drei-Wege-Ventil vorgesehen, mit dem zusätzlich zur Herstellung eines Espressogetränks auch Dampf zum Aufschäumen von Milch oder zum Aufwärmen eines Getränks (dritte Stellung oder Dampf- bzw. Cappuccinostellung) hergestellt werden kann. Durch die Ausbildung eines bei Überschreiten eines vorgegebenen Überdrucks zwischen dem Durchlauferhitzer und der Brüheinrichtung öffnenden Druckregelventils kann der Durchlauferhitzer bei verhältnismäßig hoher Heizleistung äußerst massearm und daher in seinem Aufbau einfach und kostengünstig werden, weil nunmehr ein konstanter Volumenstrom von Wasser durch den Durchlauferhitzer gepumpt wird, unabhängig davon, ob am Sieb der Druckkammer viel oder wenig Menge des Espressogetränks abfließt.

Sobald also ein bestimmter Betriebsdruck (wählbar zwischen 10 und 18 bar) im Leitungssystem zwischen der Pumpe und der Druckkammer überschritten wird, öffnet das Überdruckventil und es fließt am Überdruckventil so viel Heißwasser ab, wie es zur Konstanthaltung der optimalen Wassertemperatur im und nach dem Durchlauferhitzer erforderlich ist, d.h., der von der Pumpe geförderte Wasserstrom, bleibt, obwohl er nicht vollständig durch das Filtersieb der Druckkammer geleitet wird, im Durchlauferhitzer konstant.

Das Überdruckventil öffnet also nicht erst, wenn unzulässig hohe Drücke im Leitungssystem auftreten, die zum Platzen oder zu einem Undichtwerden des Leitungssystems führen können, sondern es öffnet bereits viel früher, nämlich im mittleren bis oberen Arbeitsbereich der Pumpe. Dies vermeidet auch Überlastung des Elektromotors und der Pumpe. Um eine konstante Drehzahl bei ansteigendem Druck am Elektromotor zu erreichen, kann dieser einerseits so groß dimensioniert sein, daß er diese Leistung ohne nennenswerten Drehzahlabfall schafft oder es kann eine den Elektromotor steuernde elektrische Steuereinrichtung integriert werden, die last- oder drehzahlabhängig mißt und dann die Drehzahl korrigiert. Gleiches gilt auch für die Dampferzeugung, da hier der gleiche Durchlauferhitzer und das gleiche Druckregelventil benutzt wird. Dies spart Bauteile und reduziert die Kosten des Universalgerätes für die Herstellung von Kaffee und Dampf.

Durch das gleichmäßige Durchströmen und Aufheizen des Wassers durch das Wasserrohr des Durchlauferhitzers erfolgt eine gleichmäßige Wärmeabfuhr bei konstanter Heizleistung und es findet kein spontaner Anstieg der Temperatur des Durchlauferhitzers und der Brühwassertemperatur bei steigendem Druck und damit sinkender Durchflußrate im Durchlauferhitzer statt. Wichtig ist dabei, daß der von der Pumpe geförderte Volumenstrom im gesamten Arbeitsbereich bis zum Öffnungsdruck eine nahezu konstante Förderrate aufweist.

Ein weiterer Vorteil des Systems nach der Erfindung besteht darin, daß bis zur Betriebsbereitschaft der Espressomaschine eine äußerst kurze Aufheizzeit erforderlich ist, die unterhalb 30 Sekunden liegt. Und dies wird wiederum durch den äußerst massearmen Durchlauferhitzer erreicht, der sich aufgrund seiner geringen Masse äußerst schnell aufheizt.

Durch die Merkmale des Anspruchs 2 wird überhaupt gewährleistet, daß die Temperatur des Wassers nur sehr wenig schwankt und eine deutliche Überschreitung der maximalen Temperatur vermieden wird. Zur Einhaltung eines konstanten Volumenstroms können, unabhängig vom Druck des Wassers, alle Pumpen nach dem Verdrängerprinzip (Kolbenpumpen, Rotationskolbenpumpen) verwendet werden, sofern ihr Antrieb (Elektromotor) eine Konstanthaltung der Drehzahl zuläßt. Bei Schwingankerpumpen ist zwar die Frequenz des Kolbens, nicht aber immer bei ansteigendem Druck der Hub des Kolbens konstant, so daß sich eine Verwendung deselben in Verbindung mit der Erfindung nicht empfiehlt. Hier müßte nämlich dann ein unangemessen hoher Regelaufwand an der Schwingankerpumpe und an der Heizeinrichtung zur Konstanthaltung der Temperataur des Wassers eingesetzt werden. Oder es müßte die Schwingankerpumpe so groß dimensioniert werden, daß bis zum Öffnen des Überdruckventils keine merkliche Minderung der Förderleistung eintritt, was aber nur schwer realisierbar ist.

Um einen besonders massearmen Durchlauferhitzer zu erhalten, sind die Merkmale des Patentanspruchs 3 vorgesehen. Derartige in Kaffeemaschinen eingesetzte und drucklos arbeitende Durchlauferhitzer finden bereits seit eh und je Anwendung, so wie er beispielsweise in der deutschen Patentanmeldung 40 23 920.9 ganz allgemein beschrieben ist. Allerdings muß bei Anwendung eines derartigen Durchlauferhitzers in einer Espressomaschine die die Temperatur der Heizeinrichtung und somit die Temperatur des aufzuheizenden Wassers regelnde Temperaturregeleinrichtung an die neuen Einbauverhältnisse angepaßt werden. Beim gleichmäßigen Durchströmen und Erwärmen des Wassers im Durchlauferhitzer kann zwar die Temperaturregeleinrichtung bei hoher Heizleistung (etwa 1200 bis 1500 Watt) öfters aus- und einschalten, dies wirkt sich aber auf die Wassertemperatur nicht nachteilig aus, da der Durchlauferhitzer auf Temperaturwechsel schnell reagiert, und dies insbesondere aufgrund der massearmen Heizung.

Durch die Merkmale des Patentanspruchs 4 wird das überschüssige Heißwasser einer Rücklaufleitung zugeführt, die in ein Behältnis führt. Dabei kann die Ventileinrichtung entweder in der Rücklaufleitung selbst oder an der Abzweigstelle im Strömungsmittelweg zwischen dem Wassererhitzer und der Brüheinrichtung eingesetzt sein.

Durch die Merkmale des Patentanspruchs 5 führt die Rücklaufleitung zum Wasservorratsbehälter, so daß ein geschlossener Wasserkreislauf entsteht, in dem auch das über die Rücklaufleitung abfließende Heißwasser wieder dem Brühvorgang zugeführt wird. Zwar erhitzt sich durch das rückfließende Heißwasser in den Wasservorratsbehälter der Kaltwasseranteil, da aber die Brühzeit für die Herstellung eines Espressos nur einige Sekunden dauert, fällt die Erhitzung des Kaltwassers nicht so schwerwiegend ins Gewicht. Sollte allerdings das im Vorratsbehälter befindliche Wasser so aufgeheizt werden, daß im Durchlauferhitzer aufgrund von kochendem Wasser eine unzulässige Dampfblasenbildung entsteht, so schaltet der Temperaturregler kurzzeitig die Heizeinrichtung des Durchlauferhitzers ab.

Durch die Merkmale des Patentanspruchs 6 ergibt sich eine besonders einfache Ventileinrichtung, die aus einem in der Abzweigstelle oder in der Rücklaufleitung ausgebildeten Ventilsitz und einem durch die Kraft einer Feder gegen den Ventilsitz gedrückten Dichtkörper besteht. Derartige Ventile sind äußerst kostengünstig und öffnen in Abhängigkeit der vorgegebenen Federkraft und der Größe der Dichtfläche zuverlässig bei dem vorgegebenen Öffnungsdruck. Durch die Druckregelung der Ventileinrichtung werden auch in vorteilhafter Weise Druckspitzen im Strömungsmittelweg vermieden, so daß die in der Brühgetränkezubereitungsmaschine ausgebildeten Leitungen, Schläuche und Verschraubungen nicht unzulässig hohen Pumpendrücken ausgesetzt werden. Auch wird durch diese Maßnahme der Elektromotor und die Pumpe weniger beansprucht. Dies führt ebenfalls zu einer Verbilligung einer Brühgetränkezubereitungsmaschine, da keine hoch beanspruchten Bauteile verwendet werden müssen.

Durch die Merkmale des Patentanspruchs 7 ist hinter der Abzweigung des Sicherheitsventils in Richtung der Brüheinrichtung im Strömungsmittelweg ein Mehrwegeventil ausgebildet, das beim Ausschalten des Espressobetriebs in die Nullstellung den in der Strömungsmittelleitung zwischen dem Durchlauferhitzer und dem Mehrwegventil noch vorhandenen Restdruck zur Atmosphäre hin abbaut. Beim Einschalten wird diese Expansionsleitung zur Atmosphäre hin geschlossen, so daß sich ein Druck im Strömungsmittelweg zur Brüheinrichtung aufbauen kann. Die Entspannung in der Nullstellung hat den Vorteil, daß die in der Regel von einem Siebkorbträger und einem Brühkopf gebildete Druckkammer leicht getrennt werden kann und daß nicht zuvor noch der in der Druckkammer vorhandene Druck abgebaut werden muß, der zu Verschmutzungen durch abfließendes Pulver-Kaffeegetränk beim Abnehmen des Siebkorbträgers von der Brüheinrichtung führen kann.

Durch die Merkmale des Patentanspruchs 8 wird das Zwei-Wege-Ventil mit einer elektrischen Schalteinrichtung verbunden, die gleichzeitig in der ersten Stellung (Espressostellung) den Elektromotor mit Strom versorgt und somit die Pumpe antreibt, und die in der zweiten Stellung (Nullstellung) diesen vom Strom trennt und dabei die Heizeinrichtung in Vorwärmung umschaltet. Gleichzeitig wird der Strömungsmittelweg über die Expansionsleitung zur Atmosphäre hin freigegeben. Durch die Vorwärmung nach Einschalten des Geräts ist der Durchlauferhitzer nach kürzester Zeit betriebswarm, so daß nach Einschalten der Pumpe sofort heißes Wasser oder Dampf erzeugt werden kann, ohne daß anfänglich noch kaltes Wasser zur Brüheinrichtung fließt. Nach Abschalten der Pumpe sperrt diese den Weg vom Wasservorratsbehälter und das Gerät wechselt wieder in die Vorwärmphase. Dabei wird neben der Betriebswarmhaltung des Durchlauferhitzers dieser auch zunächst vom vorhandenen Restwasser durch Verdampfen und Ausstoßen von Restwasser über die Rücklaufleitung befreit. Durch die Dampfblasenbildung wird auch die Rücklaufleitung von Restwasser befreit. Mit Hilfe dieser Einrichtung wird eine Einhandbedienung möglich. Der Schalteinrichtung kann noch ein Ein-/Ausschalter vorgeschaltet sein, um das Gerät gänzlich von dem Netz zu trennen bzw. mit diesem zu verbinden.

Nach den Merkmalen des Patentanspruchs 9 wird eine elektrische Schalteinrichtung angegeben, die bei Dampfbetrieb die Drehzahl des Elektromotors und somit die Pumpenleistung so stark herabsetzt, daß der in den Durchlauferhitzer einfließende Wasseranteil vollständig verdampft, der dann über die dritte Stellung (Dampf- oder Cappuccinostellung) des Mehrwegeventils einer Dampfentnahmestelle zugeführt wird.

Nach den Merkmalen des Patentanspruchs 10 wird nunmehr ein Vier-Wege-Ventil in der Brühgetränkezubereitungsmaschine eingesetzt, mit der sowohl ein Espresso, wie normaler Kaffee oder Tee (vierte Stellung oder Kaffee- bzw. Teestellung) und auch Dampf erzeugt werden kann. Auch hierfür ist dann eine elektrische Schalteinrichtung (Anspruch 12) vorgesehen, durch die sowohl beim Herstellen eines Espressos oder Kaffees gleiche Pumpendrehzahl erzeugt wird und durch die bei der Herstellung von Dampf die Pumpendrehzahl herabgesetzt wird. Die Nullstellung des Mehrwegeventils ist hierbei die Stellung, in der der Elektromotor abgeschaltet wird und gleichzeitig die Leitungen zum Kaffee- oder Teefilter und zur Brüheinrichtung gesperrt werden und gleichzeitig die Leitung zur Dampfabgabeeinrichtung mit der Atmosphäre verbunden wird, um einerseits ein Rückfließen von Kaffeegetränk aus dem Filter und der Brüheinrichtung zur Atmosphäre zu verhindern und andererseits den Strömungsmittelweg zwischen Pumpe und Mehrwegeventil drucklos zu machen und anschließend zu entleeren (Vorwärmphase).

Durch die Merkmale der Patentansprüche 10 und 11 ergibt sich also eine kombinierte Brühgetränkezubereitungsmaschine, mit der ein Espresso, ein Kaffee oder Dampf zum Aufwärmen oder Aufschäumen von Milch hergestellt werden kann.

Durch die Merkmale des Patentanspruchs 12 sind die Achsen der Schalteinrichtung und des Mehrwegeventils miteinander gekoppelt, so daß beim Betätigen des Mehrwegeventils gleichzeitig die Schalteinrichtung entsprechend verstellt wird. Dabei kann die Achse sowohl der Schalteinrichtung wie die des Mehrwegeventils von einer gemeinsamen Achse gebildet werden, was zu einer Reduzierung der Bauteile führt. Hierdurch ergibt sich eine vorteilhafte Einhandbedienung des Mehrwegeventils und der Schalteinrichtung der Brühgetränkezubereitungsmaschine.

Ein Ausführungsbeispiel der erfindungsgemäßen Brühgetränkezubereitungsmaschine ist in der Zeichnung dargestellt. Es zeigen:
- Fig. 1: schematischer Aufbau einer Brühgetränkezubereitungsmaschine, die Espresso, Kaffee und Dampf erzeugen kann und
- Fig. 2: schematisch dargestellter Stromlaufplan zu der in Fig. 1 dargestellten Brühgetränkezubereitungsmaschine.

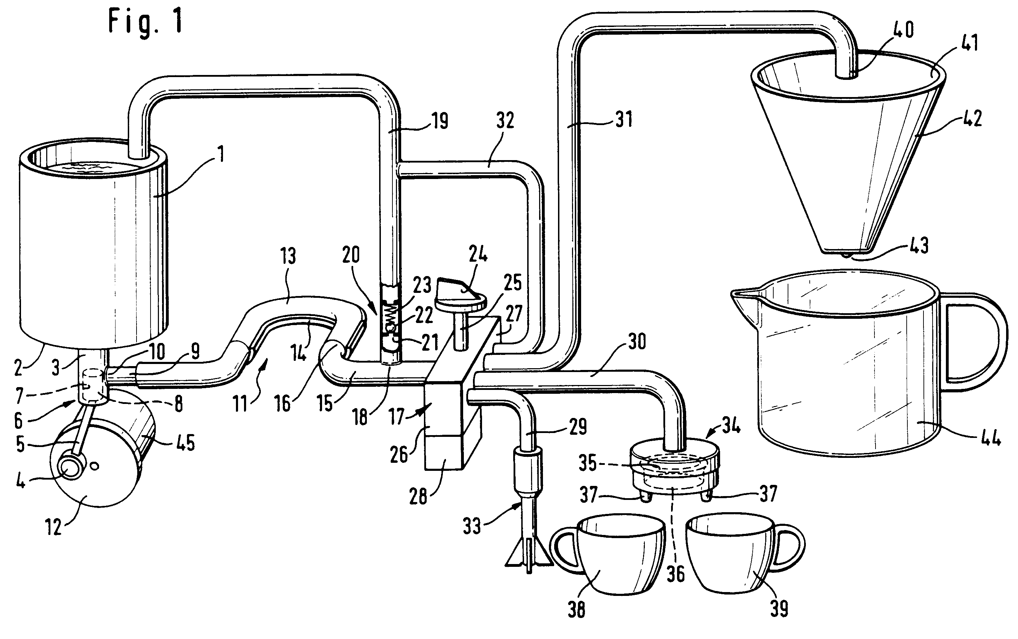

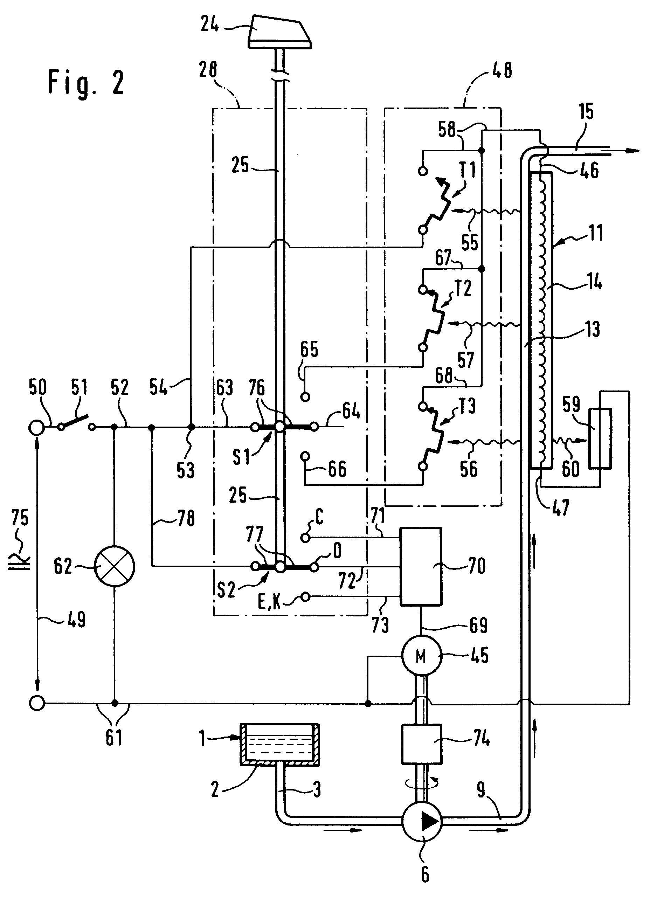

In Fig. 1 ist der schematische Aufbau einer Brühgetränkezubereitungsmaschine ohne elektrische Einrichtungen dargestellt, die in einem in der Zeichnung nicht dargestellten Gehäuse integrierbar ist. Die Brühgetränkezubereitungsmaschine besteht nach den Figuren 1 und 2 im wesentlichen aus einem Wasservorratsbehälter 1, der an seinem Boden 2 mit einer Auslaßleitung 3 versehen ist. In der Auslaßleitung 3 befindet sich eine Kolbenpumpe 6, die nach Fig. 1 aus einer von einem Exzenter 4 angetriebenen Pleuelstange 5 besteht, an deren freien Ende ein in einer Bohrung 7 hin- und herbewegbarer Kolben 8 ausgebildet ist. Am Eingang der Kolbenpumpe 6 ist ein in der Zeichnung nicht näher dargestelltes Ventil ausgebildet, das beim Ansaugen von Wasser aus dem Wasservorratsbehälter 1 öffnet und das beim Ausstoßen von Wasser aus der Kolbenpumpe 6 zum Wasservorratsbehälter 1 hin verschlossen wird. Genau andersrum verhält sich ein am Ausgang 10 der Kolbenpumpe 6 ausgebildetes, aber in der Zeichnung nicht dargestelltes Druckventil, das in der Ansaugphase der Kolbenpumpe 6 den Ausgang 10 verschließt und in der Druckphase den Ausgang 10 zum Durchlauferhitzer 11 hin öffnet.

In der Ebene hinter der Exzenterscheibe 12, an der der Exzenter 4 ausgebildet ist, ist eine in Fig. 1 und 2 nicht näher dargestellte Getriebeeinrichtung ausgebildet, die mit einem in der Zeichnung ebenfalls nicht dargestellten Ritzel eines Elektromotors 45 verbunden ist. Anstelle der in Fig. 1 dargestellten und über einen Exzenter 4 angetriebenen Kolbenpumpe 6 kann auch eine Schwingankerpumpe mit einer konstanten Hubregelung oder eine sonstige Strömungsmittelpumpe mit nahezu konstantem Durchfluß (auch bei höherem Druck von maximal 15 bar) verwendet werden.

Am Ausgang 10 der Kolbenpumpe 6 schließt sich nach Fig. 1 und 2 eine Leitung 9 an, die in das U-förmig verlaufende Wasserrohr 13 des Durchlauferhitzers 11 einmündet. Unterhalb des Wasserrohrs 13 ist an dieses ein Rohrheizkörper 14 thermisch gut wärmeleitend angelötet oder angeschweißt, der ebenfalls, wie das Wasserrohr 13, U-förmig verläuft. Der Rohrheizkörper 14 weist elektrische Anschlüsse 46, 47 (in Fig. 1 nicht dargestellt) auf, die mit einer elektrischen Schalteinrichtung 28 und einer Temperaturregeleinrichtung 48, wie sie in Fig. 2 näher beschrieben ist, verbunden sind.

An den Auslauf 16 des Wasserrohrs 13 schließt sich eine Auslaßleitung 15 an, die nach Fig. 1 zu einem Mehrwegeventil 17 führt. Zwischen dem Mehrwegeventil 17 und dem Durchlauferhitzer 11 ist nach Fig. 1 eine Abzweigstelle 18 ausgebildet, von der eine Rücklaufleitung 19 zurück zum Wasservorratsbehälter 1 führt. In der Rücklaufleitung 19 ist ein Überdruckventil 20 ausgebildet, das im wesentlichen aus einem Dichtsitz 21 besteht, gegen den durch die Kraft einer Feder 23 eine Kugel 22 dichtend gedrückt wird. Zur Vereinfachung wurde dieses Überdruckventil 20 lediglich schematisch mit dem Dichtsitz 21, der Kugel 22 und der Feder 23 dargestellt. Es sind aber auch andere Überdruckventile durchaus denkbar. In Fig. 2 endet die Auslaßleitung 15 kurz vor der Abzweigung 18. Der sich an die Abzweigung 18 anschließende Teil der Brühgetränkezubereitungsmaschine nach Fig. 1 ist ebenfalls Bestandteil in Fig. 2, dieser Abschnitt wurde aber der Einfachheit halber in Fig. 2 nicht dargestellt.

Das Mehrwegeventil 17 weist nach Fig. 1 und 2 einen von Hand betätigbaren Drehknopf 24 auf, der über die Achse 25 mit in der Zeichnung nicht dargestellten Ventilschließgliedern verbunden ist, die in Bohrungen (nicht dargestellt) im Gehäuse 26 des Mehrwegeventils 17 drehbar gelagert sind. Das Mehrwegeventil 17 ist mit einer elektrischen Schalteinrichtung 28 über die Achse 25 derart gekoppelt, daß beim Verdrehen des Drehknopfes 24 neben der Verstellung des Mehrwegeventils 17 auch die elektrische Schalteinrichtung 28 verstellt wird, durch die die Drehzahl des Elektromotors und die Heizeinrichtung 14 des Durchlauferhitzers 11 gesteuert wird.

Das Mehrwegeventil 17 ist von der einen Seite mit der Auslaßleitung 15 verbunden, während auf der anderen Seite 27 eine Dampfleitung 29, eine Espressoleitung 30, eine Kaffee- oder Teeleitung 31 und eine Expansionsleitung 32 abzweigen. Die Dampfleitung 29 führt zu einer Dampfdüse 33, in der die Dampfgeschwindigkeit einerseits erhöht und andererseits Mittel vorgesehen sind, durch die überhaupt eine Schaumbildung beim Eintauchen in Milch ermöglicht wird. Das freie Ende der Espressoleitung 30 führt zu einer Brüheinrichtung 34, die aus einer mit Kaffeemehl befüllbaren Druckkammer 35 besteht, an deren Ausgang ein Sieb 36 ausgebildet ist, über das das fertiggestellte Espressogetränk zu Auslässen 37 fließt, von wo es in darunter abgestellte Tassen 38, 39 einströmt. Das Ende 40 der Kaffeeleitung 31 ist senkrecht oberhalb der Öffnung 41 eines Kaffeefilters 42 angeordnet, der mit einem Papierfilter versehen werden kann, in den dann das für den Brühvorgang eines Kaffees erforderliche Kaffeemehl eingefüllt wird. Am Boden des Filters 42 ist eine Auslaßöffnung 43 ausgebildet, über die das hergestellte Kaffee- oder Teegetränk in ein darunter abgestelltes Gefäß 44 abfließt.

In Fig. 2 ist die mit dem Drehknopf 24 und der Achse 25 verbundene elektrische Schalteinrichtung 28 (strichpunktiert eingerahmt) sowie die mit dem Durchlauferhitzer 11 verbundene Temperaturregeleinrichtung 48 (langstrich-, kurzstrichpunktiert eingerahmt) als elektrisches Schaltbild dargestellt, die von einer elektrischen Spannungsquelle 49 mit Strom versorgt wird. Von der elektrischen Spannungsquelle 49 führt die eine Stromleitung 50 zu einem elektrischen Schalter 51, dessen Ausgang über die Stromleitung 52 zu einer Abzweigstelle 53 führt. Die Abzweigstelle 53 führt zum einen über die Stromleitung 54 zu einem Temperaturregler T1, der in Abhängigkeit der Temperatur des Durchlauferhitzers 11 ein- bzw. ausgeschaltet wird. Der Temperaturregler T1 öffnet sich, wenn der Durchlauferhitzer 11 etwa eine Temperatur von t1 = 160° C aufweist. Die Temperatur t1 ist die Vorheiztemperatur des Durchlauferhitzers 11, die sich nach Einschalten des elektrischen Schalters 51, also vor Einschalten der Kolbenpumpe 6 durch den Motor 45 an dem Durchlauferhitzer 11 einstellt. Die Wellenlinie 55 stellt symbolisch die vom Durchlauferhitzer 11 auf den Temperaturregler T1 einwirkende Wärmestrahlung dar. Gleiches gilt für die Wellenlinien 56 und 57, durch die die vom Durchlauferhitzer 11 auf die Temperaturregler T3 und T2 einwirkende Wärme dargestellt wird.

Der Temperaturregler T1 ist nach Fig. 2 am Ausgang über die Stromleitung 58 mit dem elektrischen Anschluß 46 des Rohrheizkörpers 14 des Durchlauferhitzers 11 verbunden. An den elektrischen Anschluß 47, der hinter dem Rohrheizkörper 14 liegt, schließt sich eine Temperaturschmelzsicherung 59 an, die in direktem Wärmekontakt (dargestellt durch die Wellenlinie 60) mit dem Rohrheizkörper 14 steht. Diese Temperaturschmelzsicherung 59 spricht an, wenn der Rohrheizkörper 14 eine unzulässig hohe Temperatur erreicht, d.h., wenn er aufgrund eines nicht öffnenden Temperaturreglers T1, T2 oder T3 durchzuschmelzen droht. Die Temperaturschmelzsicherung 59 ist über die Ausgangsstromleitung 61 mit dem anderen Anschluß der elektrischen Spannungsquelle 49 verbunden. Die elektrische Spannungsquelle 49 kann entweder an eine Wechselspannungs- oder Gleichspannungsquelle angeschlossen sein, was durch die Symbole 75 dargestellt ist.

Zwischen die Stromleitungen 52 und 61 ist nach Fig. 2 eine Glühlampe 62 geschaltet, die beim Schließen des Schalters 51 leuchtet und einer Bedienungsperson anzeigt, daß die Brühgetränkezubereitungsmaschine eingeschaltet ist. Von der Abzweigstelle 53 zweigt eine weitere Stromleitung 63 parallel zur Stromleitung 54 ab, die zu einem Drei-Wege-Schalter S1 führt. Der Drei-Wege-Schalter S1 ist über die Achse 25 mit dem Drehknopf 24 mechanisch drehfest verbunden. Der Drei-Wege-Schalter S1 ist mit seiner Kontaktzunge 76 in drei Stellungen bringbar, in denen der Drei-Wege-Schalter mit den Ausgangsleitungen 64, 65, 66 in Verbindung gebracht werden kann. Während die erste Ausgangsleitung 64 mit der Kontaktzunge 76 die Nullstellung des Drei-Wege-Schalters S1 darstellt, wird bei der Verbindung der Kontaktzunge 76 mit der zweiten Ausgangsleitung 65 der Temperaturschalter T2 mit der Spannungsquelle 49 verbunden, der wiederum über die Stromleitung 67 und der Stromleitung 58 mit dem Rohrheizkörper 14 verbunden ist. Der Temperaturschalter T2 dient für den Dampf- oder Cappuccinobetrieb und gelangt bei einer Temperatur von etwa 200° C in seine Offenstellung. Beim Kurzschließen der Kontaktzunge 76 mit der dritten Ausgangsleitung 66 wird die Verbindung vom Temperaturregelschalter T1 und der ersten Ausgangsleitung 64 getrennt und mit der dritten Ausgangsleitung 66 verbunden, an die sich ein dritter Temperaturregelschalter T3 anschließt, der über die Stromleitung 68 und die Stromleitung 58 mit dem Rohrheizkörper 14 verbunden ist. Der dritte Temperaturregelschalter T3 dient zur Regelung der Wassertemperatur bei der Herstellung eines Espressos. Hierbei soll etwa der Temperaturregelschalter T3 so takten, daß eine Temperatur des aus dem Wasserrohr 13 abfließenden Heißwassers von 95° C erreicht wird. Dieser dritte Temperaturregelschalter T3 regelt gleichzeitig die Wassertemperatur bei Herstellung eines Kaffeegetränks, die dann ebenfalls bei etwa 95° C liegt. Die Temperaturregelschalter T1, T2 und T3 sind am Durchlauferhitzer 11 befestigt bzw. in deren Nähe derart angeordnet, daß sich die für die einzelnen Betriebszustände gewünschten Temperaturen sowohl im Standby-Betrieb (Vorheizbetrieb bei etwa 160° C) wie im Cappuccinobetrieb (Temperaturbetrieb bei etwa 200° C) als auch im Espressobetrieb (Wassertemperatur bei etwa 95° C) einstellen.

Die Achse 25 der elektrischen Schalteinrichtung 28 ist nach Fig. 2 weiterhin mit einem zweiten Drei-Wege-Schalter S2 mechanisch verbunden, der die Aufgabe hat, die Drehzahl des Elektromotors 45 zu steuern. Hierzu dient eine mit dem Elektromotor 45 über die Leitung 69 verbundene elektrische Steuereinrichtung 70, die drei Eingänge 71, 72, 73 vom Schalter S2 her aufweist, die mit der Kontaktzunge 77 des elektrischen Schalters S2 in Abhängigkeit der Drehstellung der Achse 25 verbindbar sind. Die Kontaktzunge 77 ist über die Leitung 78 mit der Spannungsquelle 49 verbunden. Der Eingang 72 des Schalters S2 stellt die Nullstellung, der Eingang 71 die Dampf- bzw. Cappuccinostellung und der Eingang 73 die Espresso- bzw. Kaffeestellung dar. In der Cappuccinostellung "C", in der im Wasserrohr 13 Dampf erzeugt werden soll, steuert die elektrische Steuereinrichtung 70 den Elektromotor 45 mit einer niederen Drehzahl als in der Espresso- oder Kaffee-Stellung "E", "K", in der der Elektromotor 45 mit einer erheblich höheren Drehzahl die Kolbenpumpe 6 antreibt, um so heißes Wasser auf etwa 95° C aufzuheizen.

Die Wirkungsweise der erfindungsgemäßen Brühgetränkezubereitungsmaschine nach den Figuren 1 und 2 ist folgende:

### Nullstellung:

Wird der elektrische Schalter 51 eingeschaltet, so leuchtet die Glühlampe 62 und es fließt ein Strom über die Stromleitung 54 zu dem noch kalten und daher geschlossenen Temperaturregler T1 und von dort über die Stromleitung 58 zum Rohrheizkörper 14. Die Rücklaufleitung führt dann über die Temperaturschmelzsicherung 59 und die Ausgangsstromleitung 61 zum anderen Kontakt der Spannungsquelle 49. In der Nullstellung ist gleichzeitig der Schalter S2 mit dem Eingang 72 verbunden, so daß der Elektromotor 45 nicht mit Strom versorgt wird und daher stillsteht. In der Nullstellung wird der Rohrheizkörper 14 aufgeheizt, bis er eine Vorheiztemperatur von etwa 160° C aufweist. Bei dieser Temperatur schaltet sich der Temperaturregler T1 aus und unterbricht den Strom zum Rohrheizkörper 14. Sobald eine bestimmte Temperatur unterschritten wird, schließt der Temperaturregler T1 wieder und es wird der Rohrheizkörper 14 und somit auch der Durchlauferhitzer 11 wieder bis zur Abschalttemperatur von 160° C aufgeheizt. Diese Vorheizphase ist in kürzester Zeit abgeschlossen, da der Durchlauferhitzer 11 sehr massearm ist. Diese Vorheizphase dauert so lange, solange der elektrische Schalter 51 eingeschaltet bleibt und solange auch nicht die elektrische Schalteinrichtung aus der Nullstellung gedreht wird.

### Cappuccinostellung:

Soll nun ein Cappuccino hergestellt werden, so wird über den Drehknopf 24 und die Achse 25 die elektrische Schalteinrichtung 28 derart verdreht, daß der Drei-Wege-Schalter S1 über die Kontaktzunge 76 mit der zweiten Ausgangsleitung 65 kontaktiert und gleichzeitig sich die Kontaktzunge 77 des Schalters S2 mit dem Eingang 71 verbindet. Hierbei verlassen die Schalter S1 und S2 ihre Nullstellungen. Die Cappuccinostellung der Schalter S1 und S2 ist erreicht und es wird Strom in den Rohrheizkörper 14 eingespeist, da der Temperaturregelschalter T2 geschlossen ist, weil er noch unterhalb seiner Abschalttemperatur von 200° C liegt.

Gleichzeitig wird über den Eingang 71 die elektrische Steuereinrichtung 70 derart geschaltet, daß der Elektromotor 45 mit geringerer Drehzahl dreht und dadurch über eine zwischen dem Elektromotor 45 und der Pumpe 6 ausgebildete Getriebeeinrichtung 74 die Kolbenpumpe 6 antreibt, so daß über die Leitung 9 nur so wenig Wasser in das Wasserrohr 13 einfließt, daß dieses dort verdampft und dem Mehrwegeventil 17 zugeführt wird. Da bei der Verstellung der elektrischen Schalteinrichtung 28 in den Cappuccinobetrieb auch das ebenfalls mit der Achse 25 verbundene Mehrwegeventil 17 in die Cappuccinostellung verstellt wurde, wird der Dampf über die Dampfleitung 29 zur Dampfdüse 33 geleitet, wo er beschleunigt austritt. Dieser Dampf vermischt sich beim Eintauchen mit Milch, die somit aufgeschäumt wird. Nach Beendigung des Aufschäumvorgangs wird das Mehrwegeventil 17, die elektrische Schalteinrichtung 28 und die Temperaturregeleinrichtung 48 wieder in die Nullstellung gebracht, wobei gleichzeitig das Mehrwegeventil 17 eine Expansionsleitung 32 freigibt, die über die Rücklaufleitung 19 zum Wasservorratsbehälter 1 führt. Der im Leitungssystem 9, 13, 15 aufgebaute Dampfdruck wird über die Leitung 32, 19 zum Wasservorratsbehälter 1 hin abgebaut. Dabei werden vom Mehrwegeventil 17 gleichzeitig die Leitungen 29, 30 und 31 zur Expansionsleitung 32 hin gesperrt, damit nicht Milch- oder Kaffeereste zurück zum Vorratsbehälter 1 gefördert werden.

### Espresso- oder Kaffeestellung:

Beim Herstellen eines Espressos wird der Drehknopf 24 aus der Nullstellung so weit verdreht, bis die Kontaktzunge 76 des Drei-Wege-Schalters S1 die Verbindung der ersten Ausgangsleitung 64 (Nullstellung) trennt und mit der dritten Ausgangsleitung 66 eine Verbindung herstellt. Gleichzeitig wechselt die Kontaktzunge 77 des Schalters S2 ihren Eingang 72 und wandert zu dem Eingang 73. Die Espressostellung ist erreicht und der Temperaturregelschalter T3 ist geschlossen, da seine Öffnungstemperatur über der Vorheiztemperatur des Temperaturreglers T1 liegt.

Gleichzeitig ergeht von der elektrischen Steuereinrichtung 70 ein Impuls zum Elektromotor 45, der nun mit einer höheren Drehzahl dreht, als bei der Herstellung eines Cappuccinos. Die Kolbenpumpe 6 saugt nun Wasser aus dem Wasservorratsbehälter 1 und fördert es über die Leitung 9 in das bereits vorgeheizte Wasserrohr 13, in dem das Wasser erhitzt und über die Leitung 15 dem Mehrwegeventil 17 zugeführt wird, wo es über die Espressoleitung 30 in die Brüheinrichtung 34 strömt. Dort extrahiert das heiße Wasser das in der Druckkammer 35 befindliche Espressomehl. Das so fertiggestellte Espressogetränk fließt unter Cremabildung über das Sieb 36 und die Auslässe 37 in die darunter gestellten Tassen 38, 39. Aufgrund des vorgeheizten Durchlauferhitzers fließt gleich von Anfang an heißes Wasser in die Druckkammer 35.

In Abhängigkeit des Mahl- und Stopfgrades des Kaffeemehls kann es beim Brühbetrieb vorkommen, daß das von der Kolbenpumpe 6 gleichmäßig geförderte Wasservolumen nicht in entsprechend gleicher Menge an den Auslässen 37 abfließt, sondern beim Durchgang durch das Espressomehl derart gebremst wird, daß sich in den Leitungen 9, 13, 15 und 30 ein Überdruck aufbaut. Um jedoch den Pumpenbetrieb bei nahezu unveränderter Drehzahl des Elektromotors 45 aufrechtzuerhalten und gleichzeitig die Durchflußmenge durch den Durchlauferhitzer 11 konstant zu halten, öffnet bei ansteigendem Druck das Überdruckventil 20, so daß das überschüssige Wasser über die Rücklaufleitung 19 zum Wasservorratsbehälter 1 zurückströmt, während die Wassermenge, die pro Zeiteinheit das in der Druckkammer 35 befindliche Kaffeemehl passieren kann, an den Auslässen 37 abfließt. Durch diese Druckregeleinrichtung wird also einerseits erreicht, daß nicht allzu hohe Drücke im Leitungssystem 9, 13, 15, 30 entstehen und andererseits ein konstanter Volumenstrom an Wasser durch den Durchlauferhitzer 11 fließt und dort gleichmäßig erhitzt wird. Dabei regelt der Temperaturregelschalter T3 die Temperatur des Rohrheizkörpers 14 und somit die Wassertemperatur im Wasserrohr 13. Wird das im Wasservorratsbehälter 1 befindliche Wasser durch das rückströmende Heißwasser so aufgewärmt, daß dem Durchlauferhitzer 11 immer mehr wärmeres Wasser zugeführt wird, so schaltet letztendlich der Temperaturregelschalter T3 ab und verhindert eine Überhitzung des im Wasserrohr 13 befindlichen Wassers.

Ein weiterer Vorteil des Überdruckventils 20 besteht darin, daß der Elektromotor 45 und somit auch die Kolbenpumpe 6 nicht durch zu hohen Druck übermäßig hoch beansprucht werden, was sich beim Elektromotor 45 letztendlich durch zu hohe Wärmebelastung und bei der Kolbenpumpe 6 durch eine frühzeitigere Undichtigkeit am Kolbendichtring oder sonstigen Verschleißerscheinungen nachteilig auswirken würde. Zwar kann die Drehzahl des Elektromotors 45 bei ansteigendem Druck bis zum Ansprechen des Überdruckventils 20 abfallen, dies kann aber, falls nötig, durch eine die Drehzahl des Elektromotors 45 bei ansteigendem Druck konstant haltende Steuereinrichtung kompensiert werden, die in die Steuereinrichtung 70 integriert sein kann. Gleiches ist auch durch einen etwas stärkeren Elektromotor 45 möglich.

Durch die konstante Durchflußgeschwindigkeit des Wassers durch das Wasserrohr 13 erfolgt - unabhängig davon, ob mehr oder weniger Wasser durch die Brüheinrichtung 34 fließt - im Durchlauferhitzer 11 eine gleichmäßige Wärmeabfuhr und es findet kein spontaner Anstieg der Brühwassertemperatur statt.

Nach Beendigung der Herstellung eines Espressos wird der Drehknopf 24 wieder in die Nullstellung gebracht und die Kontaktzunge 77 des Schalters S2 trennt die Verbindung zum Eingang 73 und verbindet diese mit dem Eingang 72. Gleichzeitig trennt sich die Kontaktzunge 76 des Schalters S1 von der dritten Ausgangsleitung 66 und sie wird mit der Ausgangsleitung 64 verbunden.

### Kaffeeherstellung:

Bei der Herstellung eines Kaffees wird die elektrische Schalteinrichtung 28 in dieselbe Stellung gebracht, wie sie bei der Espressoherstellung bereits erklärt wurde. Allerdings wird der Drehknopf 24 und somit die Achse 25 noch weiter gedreht, bis die Leitungen 29, 30 versperrt und die Leitung 31 zum Filter 42 geöffnet ist. Es folgt der gleiche Ablauf wie bei der Espressoherstellung, allerdings wird nun das heiße Wasser nicht über die Espressoleitung 30, sondern über die Kaffeeleitung 31 zum Filter 42 transportiert, wo es nach Extraktion aus dem im Filter 42 befindlichen Kaffeemehl als Kaffeegetränk aus der Auslaßöffnung 43 in ein darunter abgestelltes Gefäß 44 abfließt. Ein Öffnen der Ventileinrichtung 20 ist hier in der Regel nicht erforderlich, da die Querschnitte der Kaffeeleitung 31 so groß bemessen sind, daß kein nennenswerter Überdruck im Leitungssystem 9, 13, 15 entsteht.

Nach Beendigung des Kaffeebetriebs wird die elektrische Schalteinrichtung 28 wieder in ihre Nullstellung gebracht, wobei die Leitungen 29, 30, 31 verschlossen werden und die Expansionsleitung 32 zur Rücklaufleitung 19 durch die Verdrehung des Mehrwegeventils 17 geöffnet wird, damit das im Wasserrohr 13 befindliche Restwasser zurück zum Wasservorratsbehälter 1 gefördert wird. Dies erfolgt dadurch, daß in der Nullstellung der Temperaturregler T1 geschlossen ist und so lange der Rohrheizkörper 14 vorgeheizt wird, bis das ganze Wasser im Wasserrohr 13 verdampft und über die Expansionsleitung in den Wasservorratsbehälter 1 zurückgefördert ist. Erst dann steigt die Temperatur im Rohrheizkörper 14 und somit auch die Temperatur im Temperaturregelschalter T1, bis letzterer seine Abschalttemperatur von ca. 160° C erreicht hat und öffnet.

Nach Beendigung eines oder mehrerer verschiedener Brühvorgänge kann die Brühgetränkezubereitungsmaschine durch Öffnen des elektrischen Schalters 51 gänzlich abgeschaltet werden, wobei die Glühlampe 62 ebenfalls erlischt. Um einer Bedienungsperson anzuzeigen, daß der Durchlauferhitzer 11 in seine Betriebsbereitschaft (Vorheizphase) gebracht wurde, kann eine weitere Glühlampe (nicht dargestellt) in diesem Schaltkreis ausgebildet sein, die von dem Temperaturregelschalter T1 gesteuert wird.

An dieser Stelle sei noch erwähnt, daß es auch im Sinne der Erfindung durchaus denkbar ist, daß der Elektromotor 45 bei der Kaffeeherstellung eine andere Drehzahl aufweist als bei der Espressoherstellung. Dies würde allerdings einen größeren Aufwand erfordern und der Schalter S1 müßte mit einer weiteren Ausgangsleitung und der Schalter S2 mit einem weiteren Eingang versehen sein, um für den Kaffeebetrieb eine gegenüber dem Espressobetrieb unterschiedliche Drehzahl am Elektromotor 45 herzustellen. Eine derartige Ausführung würde nur dann Sinn machen, wenn beim Kaffeebetrieb ein erheblich größerer Volumenstrom an Wasser pro Zeiteinheit benötigt wird als beim Espressobetrieb.

Weiterhin ist es auch möglich, eine weitere Stellung im Mehrwegeventil 17 und in der Schalteinrichtung 28 anzuordnen, die dann zusätzlich noch als Tassenvorwärmung arbeiten soll. Hierbei muß in der elektrischen Schalteinrichtung 28 eine weitere Kontakteinrichtung im Schalter S1 und S2 vorgesehen sein, die einerseits die Temperatur des Wassers und andererseits die Drehzahl des Elektromotors 45 steuert. In dieser Stellung verschließt das Mehrwegeventil die Leitungen 29, 30 und 31 und öffnet die Expansionsleitung 32, über die dann das im Durchlauferhitzer 11 erhitzte Wasser in ein Vorbecken (nicht dargestellt) strömt, das mit einer dampfdurchlässigen Abstellfläche (nicht dargestellt) verschlossen ist, auf der zum Aufwärmen Tassen abgestellt werden können. Eine derartige Anordnung wurde bereits in der älteren deutschen Patentanmeldung 195 45 111.2 vom 04.12.1995 in Figur 3 dargestellt und ist in der Beschreibung dort ausführlich beschrieben.

## Patentansprüche

1. Brühgetränkezubereitungsmaschine mit einem Wasservorratsbehälter (1) und einer von einem Elektromotor (45) elektrisch angetriebenen Pumpe (6), die Wasser aus dem Wasservorratsbehälter (1) unter Druck setzt und einem von einer elektrischen Heizeinrichtung (14) beheizten Durchlauferhitzer (11) zuführt, in dem das Wasser erhitzt und anschließend einer mit Kaffeemehl befüllbaren Druckkammer (35) einer Brüheinrichtung (34) zugeführt wird, aus der nach einem Extraktionsvorgang das fertige Kaffeegetränk in ein Gefäß (38, 39) abfließt,
**dadurch gekennzeichnet**,
daß im Strömungsmittelweg zwischen dem Durchlauferhitzer (11) und der Brüheinrichtung (34) eine bei Überschreiten eines vorgegebenen Drucks öffnende Ventileinrichtung (20) ausgebildet ist, daß im Strömungsmittelweg (15) hinter der Abzweigungsstelle (18) der Ventileinrichtung (20) eine erste (32) und zweite (29) Abzweigung ausgebildet ist, daß die erste Abzweigung (32) zur Atmosphäre und die zweite Abzweigung (29) zu einer Dampfabgabeeinrichtung (33) führt, daß in der ersten und zweiten Abzweigung (32, 29) und dem Strömungsmittelweg (15, 32, 29) ein Mehrwegeventil (17) mit drei Ventilstellungen ausgebildet ist, welches in der ersten Ventilstellung (Espressostellung) die Verbindung (30) zur Brüheinrichtung (34) herstellt und dabei die Verbindungen (32, 29) zur Atmosphäre und zur Dampfabgabeeinrichtung (33) sperrt, welches in der Nullstellung die Leitung zur Brüheinrichtung (34) und zur Dampfabgabeeinrichtung (33) sperrt und die Leitung (9, 13, 15) über die Expansionsleitung (32) mit der Atmosphäre verbindet und welches in der dritten Ventilstellung (Dampf- oder Cappuccinostellung) die Leitungen (30, 32) zur Brüheinrichtung (34) und zur Atmosphäre sperrt und den Strömungsmittelweg (29) mit der Dampfabgabeeinrichtung (33) verbindet.

2. Brühgetränkezubereitungsmaschine nach Anspruch 1,
**dadurch gekennzeichnet**,
daß die Pumpe (6) über den Arbeitsdruckbereich bis zum Öffnen der Ventileinrichtung (20) einen nahezu konstanten Volumenstrom liefert.

3. Brühgetränkezubereitungsmaschine nach Anspruch 1,
**dadurch gekennzeichnet**,
daß der Durchlauferhitzer (11) aus einem Wasserrohr (13) und einem mit dem Wasserrohr (13) in gutem thermischen Wärmekontakt stehenden elektrischen Rohrheizkörper (14) besteht.

4. Brühgetränkezubereitungsmaschine nach Anspruch 1,
**dadurch gekennzeichnet**,
daß die Ventileinrichtung (20) mit einer Rücklaufleitung (19) verbunden ist, die zu einem Behältnis (1) führt.

5. Brühgetränkezubereitungsmaschine nach Anspruch 4,
**dadurch gekennzeichnet**,
daß das Behältnis (1) der Wasservorratsbehälter ist.

6. Brühgetränkezubereitungsmaschine nach Anspruch 1,
**dadurch gekennzeichnet**,
daß die Ventileinrichtung (20) aus einem federkraftabhängig schließenden Überdruckventil besteht, das bei einem festgelegten Überdruck durch den Wasserdruck im Strömungsmittelweg (9, 13, 15) geöffnet wird.

7. Brühgetränkezubereitungsmaschine nach Anspruch 1,
**dadurch gekennzeichnet**,
daß im Strömungsmittelweg (9, 13, 15,30) hinter der Abzweigungsstelle (18) der Ventileinrichtung (20) eine erste Abzweigung (32) ausgebildet ist, die zur Atmosphäre führt, daß in der ersten Abzweigung (32) und dem Strömungsmittelweg (9, 13, 15) ein Mehrwegeventil (17) mit zwei Ventilstellungen ausgebildet ist, das in der ersten Ventilstellung (Espressostellung) die Verbindung zur Brüheinrichtung (34) herstellt und dabei die Verbindung (32) zur Atmosphäre sperrt und das in der Nullstellung des Ventils (17) die Leitung (30) zur Brüheinrichtung (34) sperrt und die Strömungsmittelleitung (9, 13, 15) mit der Expansionsleitung (32) zur Atmosphäre verbindet.

8. Brühgetränkezubereitungsmaschine nach Anspruch 7,
**dadurch gekennzeichnet**,
daß das Mehrwegeventil (17) mit einer elektrischen Schalteinrichtung (28) derart gekoppelt ist, daß in der ersten Stellung (Espressostellung) der Elektromotor (45) mit einer vorgegebenen Drehzahl dreht, daß durch die Verstellung des Mehrwegeventils (17) von der ersten Stellung in die Nullstellung die Drehzahl des Elektromotors (45) gestoppt und dabei die Heizeinrichtung (14) auf Vorwärmen gestellt wird.

9. Brühgetränkezubereitungsmaschine nach Anspruch 1,
**dadurch gekennzeichnet**,
daß das Mehrwegeventil (17) mit einer elektrischen Schalteinrichtung (28) derart gekoppelt ist, daß in der ersten Stellung (Espressostellung) der Elektromotor (45) mit einer vorgegebenen Drehzahl dreht, daß durch die Verstellung des Mehrwegeventils (17) von der ersten Stellung in die Nullstellung die Drehzahl des Elektromotors (45) gestoppt und dabei die Heizeinrichtung (14) auf Vorwärmen gestellt wird und daß in der dritten Stellung des Mehrwegeventils (17) die Drehzahl des Elektromotors (45) derart heruntergesetzt wird, daß durch die geringe Menge an gefördertem Wasser in den Durchlauferhitzer (11) auch Dampf erzeugt werden kann, der zum Aufwärmen von Getränken oder zum Aufschäumen von Milch dient.

10. Brühgetränkezubereitungsmaschine nach Anspruch 1,
**dadurch gekennzeichnet**,
daß im Strömungsmittelweg (9, 13, 15) hinter der Abzweigung (18) der Ventileinrichtung (20) eine erste (32), zweite (29) und dritte (31) Abzweigung ausgebildet ist, daß die erste Abzweigung (32) zur Atmosphäre, die zweite Abzweigung (29) zu einer Dampfabgabeeinrichtung (33) und die dritte Leitung (31) zu einem Kaffee- oder Teefilter (42) führt, daß in der ersten (32), zweiten (29) und dritten (31) Abzweigung und dem Strömungsmittelweg (9, 13, 15) ein Mehrwegeventil (17) mit vier Ventilstellungen ausgebildet ist, welches in der ersten Ventilstellung (Espressostellung) die Verbindung zur Brüheinrichtung (34) herstellt und dabei die Verbindung zur Atmosphäre, zur Dampfabgabeeinrichtung (33) und zum Kaffee- oder Teefilter (42) sperrt, welches in der Nullstellung die Leitung (30) der Brüheinrichtung (34), die Leitung (31) des Kaffee- oder Teefilters (42) und die Leitung (29) der Dampfabgabeeinrichtung (33) absperrt und die Strömungsmittelleitung (9, 13, 15) mit der Expansionsleitung (32) zur Atmosphäre verbindet, welches in der dritten Ventilstellung (Dampf- oder Cappuccinostellung) die Leitungen (30, 32 31) zur Brüheinrichtung (34), zur Atmosphäre, und zum Kaffee- oder Teefilter (42) sperrt und den Strömungsmittelweg (29) mit der Dampfabgabeeinrichtung (33) verbindet und welches in der vierten Stellung (Kaffeestellung) die Leitungen (30, 32, 29) zur Brüheinrichtung (34), zur Atmosphäre und zur Dampfabgabeeinrichtung (29) sperrt und die Leitung (31) zum Kaffee- oder Teefilter (42) freigibt.

11. Brühgetränkezubereitungsmaschine nach Anspruch 10,
**dadurch gekennzeichnet**,
daß das Mehrwegeventil (17) mit einer elektrischen Schalteinrichtung (28) derart gekoppelt ist, daß in der ersten Stellung (Espressostellung) der Elektromotor (45) mit einer vorgegebenen Drehzahl dreht, daß durch die Verstellung des Mehrwegeventils (17) von der ersten Stellung (Espressostellung) in die Nullstellung die Drehzahl des Elektromotors (45) gestoppt und dabei die Heizeinrichtung (14) auf Vorwärmen gestellt wird, daß in der dritten Stellung (Dampf- oder Cappuccinostellung) des Mehrwegeventils (17) die Drehzahl des Elektromotors (45) derart heruntergesetzt wird, daß durch die geringe Menge an gefördertem Wasser in dem Durchlauferhitzer (11) Dampf erzeugt wird, der zum Aufwärmen von Getränken oder zum Aufschäumen von Milch dient und daß in der vierten Stellung (Kaffeestellung) des Mehrwegeventils (17) die Drehzahl des Elektromotors (45) mit der Drehzahl in der ersten Stellung (Espressostellung) übereinstimmt.

12. Brühgetränkezubereitungsmaschine nach einem der Ansprüche 9, 10 oder 11,
**dadurch gekennzeichnet**,
daß die elektrische Schalteinrichtung (28) in dem Mehrwegeventil (17) integriert ist, daß die Schalteinrichtung (28) und das Mehrwegeventil (17) je eine Achse (25) aufweisen und daß die Achsen (25) miteinander gekoppelt sind.
